# EUROPEAN PATENT SPECIFICATION

(11) **EP 3 523 162 B1**
(45) Date of publication and mention of the grant of the patent: **01.12.2021**
(21) Application number: 17859265.5
(22) Date of filing: 06.10.2017
(51) Int. Cl.: B60R 1/04, B60R 1/12, G02F 1/157, G02B 21/18

(54) **REARVIEW ASSEMBLY WITH OCCUPANT DETECTION**
RÜCKFAHRSPIEGELANORDNUNG MIT INSASSENERKENNUNG
ENSEMBLE RÉTROVISEUR AYANT UNE DÉTECTION D'OCCUPANT

(30) Priority: 06.10.2016 US 201662405011 P
(43) Date of publication of application: 14.08.2019
(73) Proprietor: Gentex Corporation, Zeeland, MI 49464 (US)
(72) Inventor: WELLER, Andrew D., Zeeland, Michigan 49464 (US); LINTZ, Joshua D., Zeeland, Michigan 49464 (US)
(74) Representative: Müller-Boré & Partner Patentanwälte PartG mbB
(86) International application number: PCT/US2017/055558
(87) International publication number: WO 2018/067942

(56) References cited:
- US-A1- 2005 270 620
- US-A1- 2009 040 306
- US-A1- 2010 046 059
- US-A1- 2010 046 059
- US-A1- 2012 044 337
- US-A1- 2014 139 655

## Description

### FIELD OF THE DISCLOSURE

The present disclosure generally relates to a rearview assembly for a vehicle, and more particularly to a rearview assembly with occupant detection for a vehicle.

US 2010/046059 A1 describes an interior rearview mirror system including an interior rearview mirror assembly including a reflective element having a transparent substrate and a multi-zone mirror reflector established at a surface thereof. The mirror reflector includes at least a first zone and a second zone, and wherein at least one metallic reflective layer is commonly established at the surface and across the first and second zones of the mirror reflector. A display device is disposed behind the second zone of the mirror reflector and, when the display device is operating to emit display information, emitted display information passes through the second zone of the mirror reflector for viewing by a driver operating the equipped vehicle. The second zone has a degree of transmissivity of light therethrough that is greater than a degree of transmissivity of light through the first zone of the mirror reflector.

US 2012/044337 A1 describes a motor vehicle virtual vanity mirror display system including an a input device that provides a virtual vanity mirror control signal, and a camera that is adapted to capture an image of an occupant sitting on a seat of the vehicle in response to the virtual vanity mirror control signal. An image processing unit receives the image and processes the image to provide a processed image, and a display receives and displays the processed image to the occupant, in the absence of a vehicle mounted vanity mirror.

US 2014/013955 A1 describes a vehicle telematics device for driver monitoring for accident avoidance for drowsiness and distraction conditions. The distraction and drowsiness is detected by facial processing of driver's face and pose tracking as a function of speed and maximum allowed travel distance, and issuing a driver alert when a drowsiness or distraction condition is detected. The mitigation includes audible alert, as well as other methods such as dim blue night to perk up the driver. Adaptation center of driver's gaze direction and allowed maximum time for a given driver and camera angle offset as well as temporary offset for cornering for shift of vanishing point and other conditions is also performed.

### SUMMARY OF THE DISCLOSURE

According to an aspect, the problem relates to an improved rearview assembly for a vehicle. This problem is solved by a rearview assembly for a vehicle having the features disclosed in claim 1. Preferred embodiments are defined in the dependent claims. The claimed rearview assembly for a vehicle includes an electro-optic element. A first substrate includes a first surface and a second surface. A second substrate includes a third surface and a fourth surface. An electro-optic medium is disposed between the second surface and the third surface. An infrared (IR) light source is configured to transmit radiation through the electro-optic element. An image sensor is proximate the fourth surface and is configured to capture image data of an object through the electro-optic element. The image sensor is configured to identify a user of the vehicle.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front perspective view of a rearview assembly of the present disclosure with an image sensor;
FIG. 2 is a cross-sectional schematic view of an electro-optic assembly of the present disclosure; and
FIG. 3 is a control block diagram of the present disclosure.

### DETAILED DESCRIPTION

The present illustrated embodiments reside primarily in combinations of method steps and apparatus components related to a rearview assembly. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

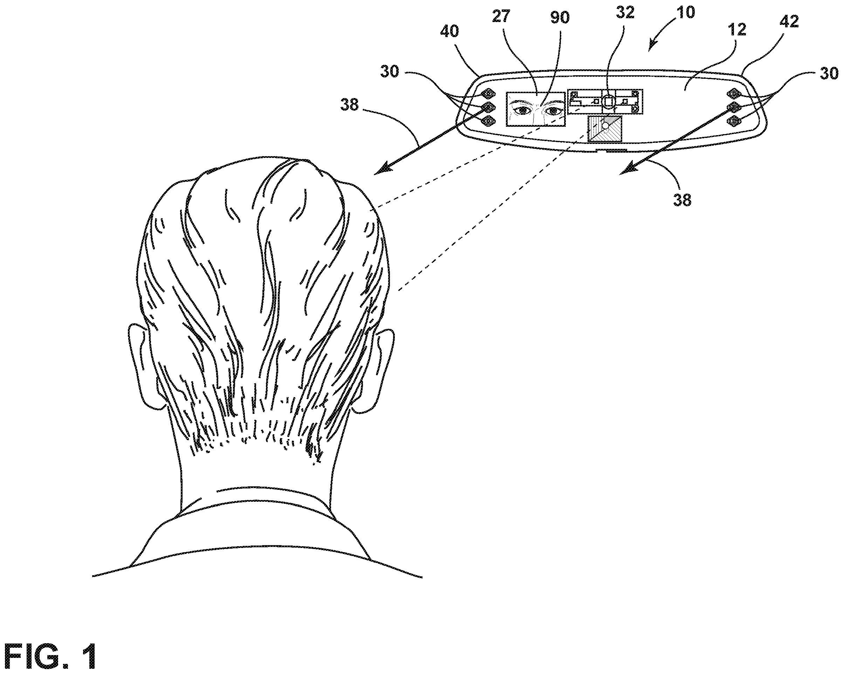

For purposes of description herein, the terms "upper," "lower," "right," "left," "rear," "front," "vertical," "horizontal," and derivatives thereof, shall relate to the disclosure as oriented in FIG. 1. Unless stated otherwise, the term "front" shall refer to the surface of the device closer to an intended viewer of the device, and the term "rear" shall refer to the surface of the device further from the intended viewer of the device. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ..." does not, without more constraints, preclude the existence of additional identical elements in the process, method, article, or apparatus that comprises the element.

Referring to FIGS. 1-3, reference numeral 10 generally designates a rearview assembly for a vehicle that includes an electro-optic element 12. A first substrate 14 includes a first surface 16 and a second surface 18. A second substrate 20 includes a third surface 22 and a fourth surface 24. An electro-optic medium 26 is disposed between the second surface 18 and the third surface 22. A light source 30, which may be an infrared (IR) light source, is configured to transmit radiation through the electro-optic element 12. An image sensor 32 is proximate the fourth surface 24 and is configured to capture image data 27 of an object through the electro-optic element 12. The image sensor 32 is configured to identify at least one passenger of the vehicle.

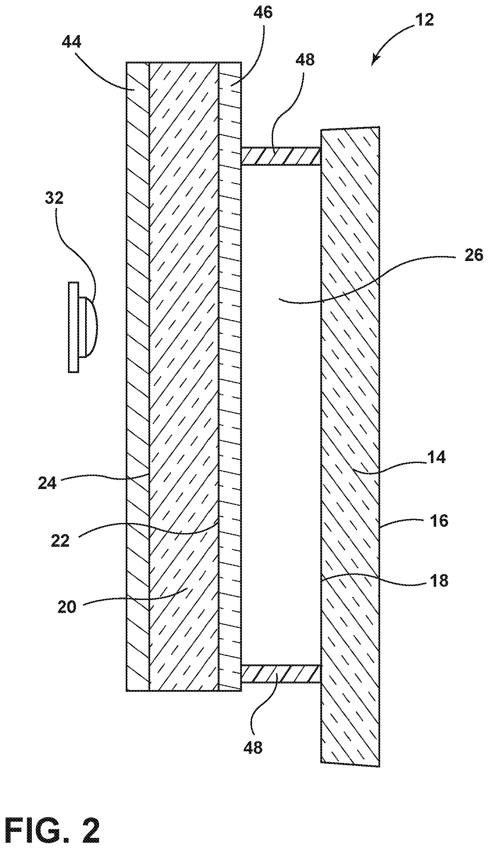

With reference to FIGS. 1 and 2, in the illustrated embodiment, the image sensor 32 is generally configured for use within the rearview assembly 10, which is operably coupled with an interior of a vehicle. The rearview assembly 10 may provide a rear view of the vehicle via a mirror disposed within the rearview assembly 10 or a display in communication with a rear imager that captures image data from a rearward area of the vehicle. Although an image sensor 32 is illustrated, it will be understood that other biometric identification functionality corresponding to a biometric characteristic of a user, such as a fingerprint, facial pattern, ear lobe geometry recognition, retina and/or iris pattern recognition, voice waves, etc. could also be implemented into the rearview assembly 10

The biometric identification function, as illustrated in FIG. 1, is generally directed to identification of a retina or iris or both of a user. In this instance, supplemental illumination in the form of infrared illumination of the retina and/or iris of an eye of the user may be necessary to illuminate the eye so that the image sensor 32 can collect the relevant image data 27. The illumination is completed by the IR light source 30, which emits infrared rays having a wavelength of greater than 900 nm. However, it is generally contemplated that other wavelengths, some of which may be less than 900 nm, can also be utilized. For example, 810 nm, 850 nm, and 940 nm wavelengths represent commonly available specifying wavelengths of infrared imaging devices. In this instance, 940 nm is desirable due to the low level of responsiveness of the human eye to this portion of the electromagnetic spectrum. Thus, infrared waves at this wavelength are typically not visible. Wavelengths that are closer to the commonly accepted limit of human vision, 780 nm, often produce a visible red glow when powered. In some instances, it may be desirable for the infrared emitter not to be easily detectable by the human eye in order to minimize driver distractions, thus improving overall safety. Additionally, the IR light source 30 may include emitters of more than one IR wavelength. For example, driver monitoring may use 940 nm illumination, while an iris scan may use 810 nm.

In some implementations, the rearview assembly 10 may include a plurality of light sources in addition to the IR light source 30 to illuminate one or more retinas and/or irises of the user of the vehicle. More specifically, it is contemplated that a light source that emits light in the visible spectrum (390-700 nm) could be included on the rearview assembly 10 that is designed to provide a focus point for the user so that the user's eyes are directed toward the image sensor 32. In this instance, the light output would be minimal so as not to distract the vision of the user.

To provide for the eye scan identification function within the rearview assembly 10, the image sensor 32 may be disposed proximate the fourth surface 24 of the electro-optic element 12. The image sensor 32 may correspond to, for example, a digital charge coupled device (DCCD) or complementary metal oxide semiconductor (CMOS) active pixel sensor. However, other sensors may also be utilized to capture the relevant image data 27. Further, the image sensor 32 may be configured to use a fixed focal length supporting lens or a variable focal length lens. In addition, the image sensor 32 may have high resolution capabilities such that the field of view captured by the image sensor 32 can be reduced (digital zoom) or articulated (pan, tilt, roll) to account for positional variation of the image sensor 32 in the rearview assembly 10, or the rearview assembly 10 in the vehicle. It is also generally contemplated that the image sensor 32 may be in communication with one or more light sources 30 such that the image sensor 32 and the light sources 30 activate simultaneously. As previously noted, the light sources 30 may correspond to one or more infrared emitters and may also correspond to light emitters in the visible spectrum. In this configuration, the image sensor 32 may be configured to selectively activate one or more infrared emitters corresponding to the light source 30 to illuminate the iris and/or retina so that the image sensor 32 may capture the relevant image data 27 used by a microcontroller to identify the user. In the event the user is acknowledged or otherwise authorized by the system, the vehicle may start or the ignition may be activated. Facial characteristics may also be monitored by intermittently capturing image data associated with the user's face. The image data can then be analyzed to detect drowsiness or other behaviors of the user.

With reference again to FIG. 1, the light sources 30 may correspond to a single IR emitter or a plurality of IR emitters that include a plurality of light emitting diodes directed toward the user in the direction of arrows 38. The light emitting diodes may be grouped in a matrix adjacent to the electro-optic element 12, or behind the electro-optic element 12. It is contemplated that the light sources 30 may be disposed at various positions adjacent to or behind the electro-optic element 12. In the illustrated embodiment, the light sources 30 are adjacent to first and second sides 40, 42 of the electro-optic element 12, or behind the electro-optic element 12. Notably, the various light emitting diodes of the light sources 30 may be constructed to provide a wavelength of light greater than 780 nm or even greater than 900 nm (outside the visible spectrum). In the event that the light sources 30 are disposed behind the electro-optic element 12, the electro-optic element 12 will be configured to allow for the light to pass through the electro-optic element 12. In some instances, as shown in FIG. 2, this may include having a high level of transmittance through the electro-optic element 12. It is generally contemplated that a layer 44 including a transflective dielectric coating may be disposed on the third surface 22 or the fourth surface 24 of the electro-optic element 12. It is also contemplated that the electro-optic element 12 may include a layer 46 including a metal-based, transflective coating disposed on the third surface 22 of the electro-optic element 12.

FIG. 2 shows a cross-sectional view of one embodiment of the electro-optic element 12. It will be understood that this is a schematic view and not to scale. The first substrate 14 may be any material that is transparent and has sufficient strength to be able to operate in the conditions, e.g., varying temperatures and pressures, commonly found in the environment of the intended use. The first substrate 14 may include any type of borosilicate glass, soda lime glass, float glass, or any other material, such as, for example, a polymer or plastic, such as Topaz®, available from Ticoma, Summit N.J., that is generally transparent in the visible region of the electromagnetic spectrum. In addition, the first substrate 14 may be constructed from a sheet of glass with a thickness ranging from 0.5 millimeters (mm) to about 12.7 mm. The second substrate 20 should generally meet the operational conditions outlined above, except that if the electro-optic element 12 is a mirror, the electro-optic element 12 does not need to be transparent, and therefore may include polymers, metals, glass, ceramics, and desirably is a sheet of glass with a thickness ranging from 0.5 mm to about 12.7 mm. If the first and second substrates 14, 20 include sheets of glass, the glass can be tempered prior to or subsequent to being coated with layers of electrically conductive material.

The coating of the third surface 22 and the coating on the second surface 18 are sealably banded proximate the outer perimeter by the sealing member 48 to define a cavity within which the electro-optic medium 26 is disposed. The layer 46 on the third surface 22 may vary depending on the final use of the device. If the device is an electrochromic mirror, then the coating may be either a transparent conductive coating, or the coating may be a layer of a reflecting or transflecting material. Typical coatings for the third surface 22 reflector are chrome, rhodium, silver, silver alloys, and combinations thereof. The sealing member 48 may be any material that is capable of adhesively bonding the coatings on the second surface 18 to the coatings on the third surface 22 to seal the perimeter such that the electro-optic medium 26 does not leak from the cavity. Optionally, the layer on the third surface 22 may be removed over a portion where the sealing member 48 is disposed.

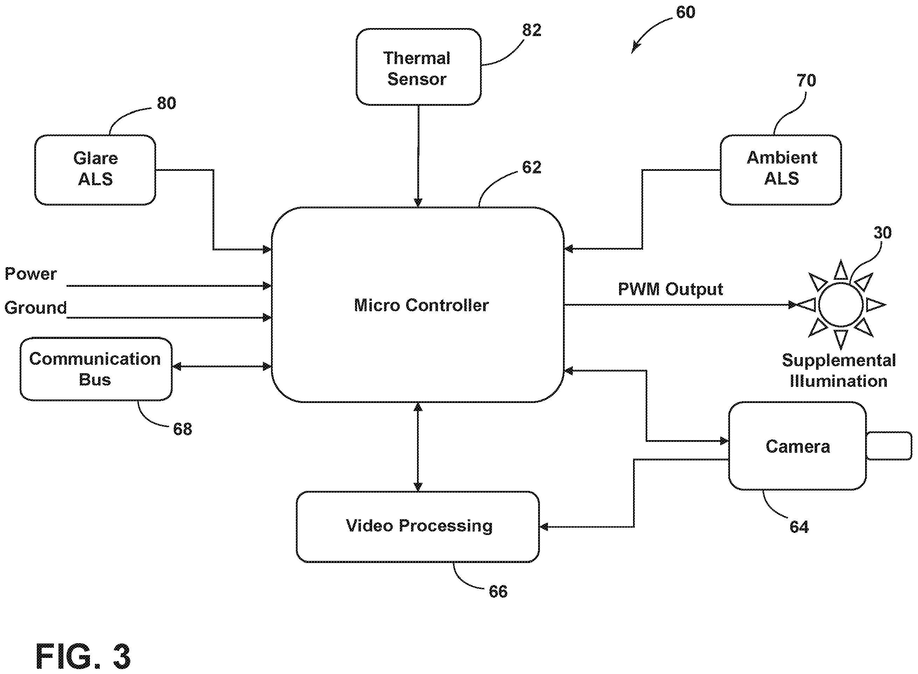

Referring now to FIG. 3, a block diagram of an identification system 60 for use with the rearview assembly 10 is illustrated. A microcontroller 62 is shown in communication with the image sensor 32 (in the form of a camera 64) and may also be in communication with a video processor 66 of the vehicle. The microcontroller 62 may also act as a pulse width modulated (PWM) power source that powers the supplemental illumination (IR light source 30). However, in another instance, a PWM power source may not be used to power the IR light source 30, and instead, a direct current is utilized and operable between on and off conditions. A communication bus 68 may be configured to deliver signals to the microcontroller 62 identifying various vehicle states and also receive signals from the microcontroller 62. For example, the communication bus 68 may be configured to communicate to the microcontroller 62 a drive selection of the vehicle, an ignition state, a door open or ajar status, a remote activation of the rearview assembly 10. Such information and control signals may be utilized by the microcontroller 62 to activate or adjust various states and/or control schemes of the rearview assembly 10 and/or the electro-optic element 12.

The microcontroller 62 may include a processor having one or more circuits configured to receive the signals from the communication bus 68 and control the rearview assembly 10. The video processor 66 may be in communication with a memory configured to store instructions to control operations of the rearview assembly 10 or the image sensor 32. For example, the microcontroller 62 may be configured to store one or more characteristics or profiles utilized by the microcontroller 62 to identify a user of the vehicle. In this configuration, the microcontroller 62 may communicate operating and identification information with the rearview assembly 10 to identify the operator of the vehicle. Additionally, based on the identification of the operator, the microcontroller 62 may be configured to control and/or communicate with additional systems of the vehicle. The microcontroller 62 also includes a power connection and a ground.

The microcontroller 62 may further be in communication with an ambient light sensor 70. The ambient light sensor 70 generally communicates an ambient light condition, for example a level of brightness or intensity of the ambient light proximate the vehicle. In response to the level of the ambient light, the microcontroller 62 may be configured to adjust a light intensity output from the display. In this configuration, the operator of the microcontroller 62 may adjust the brightness of the display to provide the image data 27 captured by the image sensor 32 and/or a reverse camera. In addition, the ambient light sensor 70 may be used to control activation of the light sensor 30. In the event there is ample ambient light for the image sensor 32 to capture the image data 27, then activation of the light source 30 may be unnecessary. In another example, the light source 30 may simply act as a focal point for the user so that the image data 27 related to the eye, and particularly the retina or iris of the eye, can be captured from the user. It is also contemplated that the image sensor 32 may be used as an input to control ambient light levels.

A glare sensor 80 may also be in communication with the microcontroller 62. The glare sensor 80 is configured to detect light from headlights of following vehicles, then relay the information to the microcontroller 62. The microcontroller 62 can then act to darken the reflected image to the user or the display image to the user. In addition, a thermal sensor 82 may also be in communication with the microcontroller 62. The thermal sensor 82 may be operable to monitor threshold values related to the temperature of the rearview assembly 10. In the event that the infrared emitter reaches too high of a temperature, power to the infrared emitter (the light source 30) could be lessened to reduce heat development, thereby protecting the infrared emitter and other components of the rearview assembly 10.

In an exemplary embodiment, a control circuit generally configured to control operating conditions of the electro-optic element 12 for use during the day versus use during the night is also used to control supplemental illumination for use with the image sensor 32 when collecting image data. For example, the forward facing ambient light sensor 70 sends an illumination signal to the microcontroller 62 regarding ambient light conditions. The information is used to determine when the lighting conditions of the driving environment have crossed a threshold level, which constitutes a switch from day mode to night mode, or from night mode to day mode. At the same time, the supplemental illumination source, in this case the light source 30, which may include, as previously noted, an infrared emitter, can be enabled. The supplemental illumination provided by the infrared emitter could then be used to assist the image sensor 32 in collecting or capturing image data. Moreover, the supplemental illumination could be varied in intensity as the lighting conditions in the driving environment continue to change (e.g., during dusk or dawn).

In another exemplary embodiment, in an effort to better control the supplemental illumination provided by the light source 30, the level at which the light source 30 use is initiated can be a different level than the aforementioned day mode to night mode and night mode to day mode switch points. It is generally contemplated that the desired onset of supplemental illumination may be different on each vehicle platform, because of the difference in ambient light that typically occurs in different vehicles as a result of more or less windows, different color interiors, etc. It will be understood that this initialization point can be selected based on predefined settings based on a particular vehicle platform.

The microcontroller 62 may further be in communication with an interface configured to receive one or more inputs configured to control at least one of the rearview assembly 10 and the reverse camera. In some embodiments, the interface may be combined with one or more devices of the vehicle. For example, the interface may form a portion of the gage cluster, the A/V system, the infotainment system, a display console and/or various input/output devices that may commonly be utilized in automotive vehicles (e.g. a steering switch, steering wheel controls, etc.). In this way, the disclosure provides for various control schemes for implementing the rearview assembly 10 in a vehicle. In a similar fashion, the microcontroller 62 may also be in communication with the reverse camera or any other form of vehicle camera system. The microcontroller 62 may receive the image data 27 from the reverse camera corresponding to a rearward-directed field of view relative to the vehicle. In this configuration, a display 90 may provide for the rearward-directed field of view to be displayed when the display of the rearview assembly 10 is not being utilized for the identification process. The microcontroller 62 may further be in communication with one or more of a gage cluster, an audio/video (A/V) system, an infotainment system, a media center, a vehicle computing system, and/or various other devices or systems of the vehicle. In various embodiments, the microcontroller 62 may display the image data 27 from at least one of the image sensor 32 and the reverse camera on the display 90.

It is also contemplated that the microcontroller 62 may be configured to authorize various settings or restrictions of settings for the vehicle based on an identification of the operator of the vehicle. The authorization may correspond to a speed governor, a payment authorization for toll roads, a log of usage and timing for an identified operator, etc. In some implementations, the rearview assembly 10 may also be configured to document information corresponding to the usage and timing, for example, the number of passengers, a top speed of the vehicle, a maximum rate of acceleration, etc. In some embodiments, the microcontroller 62 may further be in communication with a global position system (GPS) that may also provide regional restrictions for the operation of the vehicle.

In some embodiments, the microcontroller 62 may utilize the identification of the operator of the vehicle to report updates to an administrator of the vehicle. For example, in some embodiments, the microcontroller 62 may further be in communication with a mobile communication system. The mobile communication system may be configured to communicate via various mobile communication protocols. Wireless communication protocols may operate in accordance with communication standards including, but not limited to: Institute of Electrical and Electronic Engineering (IEEE) 802.11 (e.g., WiFi™); Bluetooth®; advanced mobile phone services (AMPS); digital AMPS; global system for mobile (GSM) communications; code division multiple access (CDMA); Long Term Evolution (LTE or 4G LTE); local multi-point distribution systems (LMDS); multi-channel-multi-point distribution systems (MMDS); RFID; and/or variations thereof. In this configuration, the microcontroller 62 may be configured to send an alert or message to the administrator of the vehicle in response to one or more predetermined event. The alert or message may correspond to a text message, data message, email, alert via an application operating on a smart device, etc. Additionally, the microcontroller 62 could utilize dedicated short range communications (DSRC) having one-way or two-way wireless communication channels with corresponding protocols.

A predetermined event may correspond to a wide variety of events that may be identified by the microcontroller 62 based on an identity of an operator of the vehicle. For example, the event may correspond to the vehicle crossing a geographic boundary, an ignition event identifying vehicle operation, operation during a restricted usage timing (e.g., a time between midnight and 5 am), an identification of a number of passengers in the vehicle exceeding a limit, etc. In this configuration, the microcontroller 62 may identify a restricted user of the vehicle via the image sensor 32 and provide notifications to the administrator.

In some embodiments, the microcontroller 62 may also report that an operator of the vehicle has not been identified. This may be due to a malfunction or a deliberate attempt to avoid identification from the rearview assembly 10. The microcontroller 62 may send a signal to the light source 30 (particularly if it emits light in the visible spectrum) or the display 90 to signal when an iris scan is complete, and may also provide feedback to the user when there is a misalignment, or when there is a positive indication that the user is close enough for scanning without detracting from the user's field of view (if operating the vehicle). To the extent there is a misalignment, adjustment of the rearview assembly 10 may be accomplished via motor controlled adjustment. The motor may be in communication with the microcontroller 62 to properly align the image sensor 32 with the eye(s) of a user. The system may be configured to make every effort to capture the relevant image data before requiring the user to move into alignment with the image sensor 32. In response to the operation of the vehicle without identification, the administrator of the vehicle may be notified via a message submitted from the mobile communication system reporting unauthorized or otherwise unfavorable activity of the vehicle. In this configuration, the administrator of the vehicle may be notified of any form of restricted activity that may be identified by the microcontroller 62 corresponding to a restricted or unidentified operator of the vehicle.

The electro-optic element 12 may be an electro-chromic element or an element such as a prism. One non-limiting example of an electro-chromic element is an electrochromic medium, which includes at least one solvent, at least one anodic material, and at least one cathodic material. Typically, both of the anodic and cathodic materials are electroactive and at least one of them is electrochromic. It will be understood that regardless of its ordinary meaning, the term "electroactive" will be defined herein as a material that undergoes a modification in its oxidation state upon exposure to a particular electrical potential difference. Additionally, it will be understood that the term "electrochromic" will be defined herein, regardless of its ordinary meaning, as a material that exhibits a change in its extinction coefficient at one or more wavelengths upon exposure to a particular electrical potential difference. Electrochromic components, as described herein, include materials whose color or opacity are affected by electric current, such that when an electrical current is applied to the material, the color or opacity change from a first phase to a second phase. The electrochromic component may be a single-layer, single-phase component, multi-layer component, or multi-phase component, as described in U.S. Patent Nos. 5,928,572 entitled "Electrochromic Layer And Devices Comprising Same," 5,998,617 entitled "Electrochromic Compounds," 6,020,987 entitled "Electrochromic Medium Capable Of Producing A Pre-selected Color," 6,037,471 entitled "Electrochromic Compounds," 6,141,137 entitled "Electrochromic Media For Producing A Pre-selected Color," 6,241,916 entitled "Electrochromic System," 6,193,912 entitled "Near Infrared-Absorbing Electrochromic Compounds And Devices Comprising Same," 6,249,369 entitled "Coupled Electrochromic Compounds With Photostable Dication Oxidation States," and 6,137,520 entitled "Electrochromic Media With Concentration Enhanced Stability, Process For The Preparation Thereof and Use In Electrochromic Devices"; U.S. Patent No. 6,519,072, entitled "Electrochromic Device"; and International Patent Application Serial Nos. PCT/US98/05570 entitled "Electrochromic Polymeric Solid Films, Manufacturing Electrochromic Devices Using Such Solid Films, And Processes For Making Such Solid Films And Devices," PCT/EP98/03852 entitled "Electrochromic Polymer System," and PCT/US98/05570 entitled "Electrochromic Polymeric Solid Films, Manufacturing Electrochromic Devices Using Such Solid Films, And Processes For Making Such Solid Films And Devices". The electro-optic element 12 may also be any other element having partially reflective, partially transmissive properties. To provide electric current to the electro-optic element 12, electrical elements are provided on opposing sides of the element, to generate an electrical potential therebetween. A J-clip is electrically engaged with each electrical element, and element wires extend from the J-clips to a primary printed circuit board (PCB). It is also generally contemplated that this concept could also be implemented with the electro-optic element 12, including a reflective polarizer for the main reflector layer. Additionally, an active electro-optic color filter may be utilized with the electro-optic element 12 to support additional color camera (image sensor) activities during daylight hours.

The present disclosure may be used with a mounting system such as that described in U.S. Patent Nos. 9,174,577; 8,814,373; 8,201,800; and 8,210,695; U.S. Patent Application Publication Nos. 2013/0052497 and 2012/0327234; and U.S. Provisional Patent Application Nos. 61/709,716; 61/707,676; and 61/704,869. Further, the present disclosure may be used with a rearview packaging assembly such as that described in U.S. Patent Nos. 8,885,240; 8,814,373; 8,646,924; 8,643,931; and 8,264,761; and U.S. Provisional Patent Application Nos. 61/707,525; and 61/590,259. Additionally, it is contemplated that the present disclosure can include a bezel such as that described in U.S. Patent Nos. 8,827,517; 8,210,695; and 8,201,800.

It will be appreciated that embodiments of the invention described herein may be comprised of one or more conventional processors and unique stored program instructions that control one or more processors to implement, in conjunction with certain non-processor circuits, some, most, or all of the functions of a display mirror assembly, as described herein. The non-processor circuits may include, but are not limited to signal drivers, clock circuits, power source circuits, and/or user input devices. As such, these functions may be interpreted as steps of a method used in using or constructing a classification system. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Thus, the methods and means for these functions have been described herein. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure, as shown in the exemplary embodiments, is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations.

## Claims

1. A rearview assembly (10) for a vehicle comprising:
an electro-optic element (12) comprising:
a first substrate (14) comprising a first surface (16) and a second surface (18);
a second substrate (20) comprising a third surface (22) and a fourth surface (24); and
an electro-optic medium (26) disposed between the second surface (18) and the third surface (22);
an ambient light sensor (70) configured to detect an ambient light level;
a display (90) disposed adjacent to the electro-optic element (12);
an infrared (IR) light source (30) configured to transmit radiation through the electro-optic element (12);
an image sensor (32) proximate the fourth surface (24) and configured to capture image data (27) of a user through the electro-optic element (12); and
at least one microcontroller (62) configured to:
adjust the radiation from the IR light source (30) in response to the detected ambient light level;
identify the user of the vehicle based on the image data (27); and
in response to identifying a misalignment of the user with the image sensor (32), control the display (90) providing alignment feedback to the user.

2. The rearview assembly (10) of claim 1, wherein the display is disposed proximate the fourth surface.

3. The rearview assembly (10) of either of claims 1 or 2, wherein the display presents the image data (27) captured by the image sensor (32).

4. The rearview assembly (10) of any of claims 1-3, wherein the captured image data (27) corresponds to an eye of the user of the vehicle.

5. The rearview assembly (10) of any of claims 1-4, wherein the IR light source (30) emits infrared rays having a wavelength of greater than 780 nanometers.

6. The rearview assembly (10) of any of claims 1-5, wherein the IR light source (30) emits infrared rays of more than one wavelength.

7. The rearview assembly (10) of any of claims 1-6, wherein the IR light source (30) includes at least one light emitting diode.

8. The rearview assembly (10) of any of claims 1-7, wherein the at least one microcontroller (62) is further configured to:
control a motor controlled adjustment of the image sensor (32) to align the image sensor (32) with an eye of the user in response to a misalignment.

## Patentansprüche

1. Rückfahrspiegelanordnung (10) für ein Fahrzeug, umfassend:
ein elektrooptisches Element (12), umfassend:
ein erstes Substrat (14), das eine erste Oberfläche (16) und eine zweite Oberfläche (18) umfasst;
ein zweites Substrat (20), das eine dritte Oberfläche (22) und eine vierte Oberfläche (24) umfasst; und
ein elektrooptisches Medium (26), das zwischen der zweiten Oberfläche (18) und der dritten Oberfläche (22) angeordnet ist;
einen Umgebungslichtsensor (70), der ausgestaltet ist, einen Umgebungslichtpegel zu erkennen;
eine Anzeige (90), die angrenzend an das elektrooptische Element (12) angeordnet ist;
eine Infrarot- (IR-) Lichtquelle (30), die ausgestaltet ist, Strahlung durch das elektrooptische Element (12) zu übertragen;
einen Bildsensor (32), der zur vierten Oberfläche (24) benachbart und ausgestaltet ist, Bilddaten (27) eines Benutzers durch das elektrooptische Element (12) zu erfassen; und
wenigstens einen Mikrocontroller (62), der ausgestaltet ist:
die Strahlung von der IR-Lichtquelle (30) als Reaktion auf den erkannten Umgebungslichtpegel anzupassen;
den Benutzer des Fahrzeugs basierend auf den Bilddaten (27) zu identifizieren; und
als Reaktion auf das Identifizieren einer Fehlausrichtung des Benutzers mit dem Bildsensor (32), die Anzeige (90) zu steuern bzw. zu regeln, um eine Ausrichtungsrückmeldung an den Benutzer bereitzustellen.

2. Rückfahrspiegelanordnung (10) nach Anspruch 1, wobei die Anzeige benachbart zur vierten Oberfläche angeordnet ist.

3. Rückfahrspiegelanordnung (10) nach Anspruch 1 oder 2, wobei die Anzeige die Bilddaten (27) zeigt, die von dem Bildsensor (32) erfasst werden.

4. Rückfahrspiegelanordnung (10) nach einem der Ansprüche 1 bis 3, wobei die erfassten Bilddaten (27) einem Auge des Benutzers des Fahrzeugs entsprechen.

5. Rückfahrspiegelanordnung (10) nach einem der Ansprüche 1 bis 4, wobei die IR-Lichtquelle (30) Infrarotstrahlen aussendet, die eine Wellenlänge aufweisen, die größer ist als 780 Nanometer.

6. Rückfahrspiegelanordnung (10) nach einem der Ansprüche 1 bis 5, wobei die IR-Lichtquelle (30) Infrarotstrahlen von mehr als einer Wellenlänge aussendet.

7. Rückfahrspiegelanordnung (10) nach einem der Ansprüche 1 bis 6, wobei die IR-Lichtquelle (30) wenigstens eine lichtemittierende Diode umfasst.

8. Rückfahrspiegelanordnung (10) nach einem der Ansprüche 1 bis 7, wobei der wenigstens eine Mikrocontroller (62) weiter ausgestaltet ist:
eine motorgesteuerte bzw. -geregelte Anpassung des Bildsensors (32) zu steuern bzw. regeln, um den Bildsensor (32) mit einem Auge des Benutzers als Reaktion auf eine Fehlausrichtung auszurichten.

## Revendications

1. Ensemble rétroviseur (10) pour un véhicule comprenant :
un élément électro-optique (12) comprenant :
un premier substrat (14) comprenant une première surface (16) et une deuxième surface (18) ;
un deuxième substrat (20) comprenant une troisième surface (22) et une quatrième surface (24) ; et
un milieu électro-optique (26) placé entre la deuxième surface (18) et la troisième surface (22) ;
un capteur de lumière ambiante (70) configuré pour détecter un niveau de lumière ambiante ;
un écran (90) placé de manière adjacente à l'élément électro-optique (12) ;
une source de lumière infrarouge (IR) (30) configurée de sorte à transmettre un rayonnement à travers l'élément électro-optique (12) ;
un capteur d'image (32) à proximité de la quatrième surface (24) et configuré de sorte à capturer des données d'image (27) d'un utilisateur à travers l'élément électro-optique (12) ; et
au moins un microcontrôleur (62) configuré pour :
régler le rayonnement de la source de lumière IR (30) en réponse au niveau de lumière ambiante détectée ;
identifier l'utilisateur du véhicule en se basant sur les données d'image (27) ; et
en réponse à l'identification d'un désalignement de l'utilisateur avec le capteur d'image (32), contrôler l'écran (90) donnant une rétroaction de l'alignement à l'utilisateur.

2. Ensemble rétroviseur (10) selon la revendication 1, dans lequel l'écran est placé à proximité de la quatrième surface.

3. Ensemble rétroviseur (10) selon l'une quelconque des revendications 1 ou 2, dans lequel l'écran présente les données d'image (27) captées par le capteur d'image (32).

4. Ensemble rétroviseur (10) selon l'une quelconque des revendications 1 à 3, dans lequel les données de l'image captée (27) correspondent à un œil de l'utilisateur du véhicule.

5. Ensemble rétroviseur (10) selon l'une quelconque des revendications 1 à 4, dans lequel la source de lumière IR (30) émet des rayons infrarouges ayant une longueur d'onde supérieure à 780 nanomètres.

6. Ensemble rétroviseur (10) selon l'une quelconque des revendications 1 à 5, dans lequel la source de lumière IR (30) émet des rayons infrarouges de plus d'une longueur d'onde.

7. Ensemble rétroviseur (10) selon l'une quelconque des revendications 1 à 6, dans lequel la source de lumière IR (30) comprend au moins une diode électroluminescente.

8. Ensemble rétroviseur (10) selon l'une quelconque des revendications 1 à 7, dans lequel le au moins un microcontrôleur (62) est en outre configuré pour :
contrôler un réglage du contrôleur du moteur du capteur d'image (32) pour aligner le capteur d'image (32) avec un œil de l'utilisateur en réponse à un désalignement.
